# EUROPÄISCHE PATENTSCHRIFT

(11) **EP 1 745 691 B1**
(45) Veröffentlichungstag und Bekanntmachung des Hinweises auf die Patenterteilung: **07.01.2009**
(21) Anmeldenummer: 06012363.5
(22) Anmeldetag: 16.06.2006
(51) Int. Cl.: A01F 15/14

(54) **Garnknoter, insbesondere für Ballenpressen**
Twine knotter, in particular for baler
Machine à nouer les fils, en particulier pour presse à balles

(30) Priorität: 21.07.2005 DE 202005011458 U
(43) Veröffentlichungstag der Anmeldung: 24.01.2007
(73) Patentinhaber: Rasspe Systemtechnik GmbH & Co. KG, 42929 Wermelskirchen (DE)
(72) Erfinder: Schumacher, Friedrich-Wilhelm, 57612 Birnbach (DE); Schumacher, Heinz-Günter, 57612 Eichelhardt (DE); Flanhardt, Michael, 40764 Langenfeld (DE); Acimas, Andreas, 42653 Solingen (DE)
(74) Vertreter: Grosse - Schumacher - Knauer - von Hirschhausen

(56) Entgegenhaltungen:
- DE-A1- 4 120 559
- DE-U1- 20 110 162
- FR-A- 2 692 102

## Beschreibung

### Gebiet der Erfindung

Die Erfindung betrifft einen Garnknoter, insbesondere für Ballenpressen, gemäß dem Oberbegriff von Anspruch 1. Bei derartigen Garnknotern muss eine Pressennadel, durch deren Garnöse ein Endlos-Garnstrang geführt ist, trotz rauen Arbeitsumfeldes und einer vergleichsweise langen Bewegungsbahn präzise bis zu einer Garnklemmeinrichtung vorgeschwenkt werden, welche ihrerseits in unmittelbarer Nähe eines Knoterhakens angeordnet sein muss, wobei sowohl der Knoterhaken als auch die Garnklemmeinrichtung drehangetrieben werden.

### Hintergrund der Erfindung

Derartige Garnknoter sind zum Beispiel unter dem Namen "System McCormick" seit langem bekannt und in dem Buch "Landmaschinenlehre Band II" von Prof. Dr.-Ing. Heinrich Heyde (Herausgeb.) VEB Verlag Technik Berlin, Berlin 1965 auf den Seiten 128 bis 131 beschrieben. Auch die DE-U1-201 10 162 zeigt einen derartigen Garnknoter.

Solche Garnknoter oder Garnknüpfer werden in Ballenpressen für Stroh, Heu und ähnliches Gut sowie in der Wertstoffverwertung z. B. für die Bündelung von Papier, Textilien, dünnen Blechen und dergleichen eingesetzt. Der Garnknoter findet eine weitere Anwendung in Bindemaschinen zum Umbinden von kleinen Bunden aus stängeligem Material mit Garn. Unter stängeligem Material soll in erster Linie landwirtschaftliches oder gartenbauliches Bindegut wie Porree, Zwiebelpfeifen, Pfropfunterlagen, Blumen, einzelne Pflanzen mit ihren Zweigen wie Rosensträucher und dergleichen verstanden werden. Solche Bindemaschinen oder Bindeeinrichtungen können aber auch Bestandteil von Verpackungsanlagen für die Umschnürung von Packen, Ballen oder Bündeln aus hierfür in Betracht kommenden Materialien sein.

In den stationären oder mobilen Ballenpressen für Rechteckballen wird das Pressgut mittels eines vor- und zurückbeweglichen Presskolbens in einen im Querschnitt rechteckigen Presskanal gestopft. Aus dem zusammengepressten im Querschnitt rechteckigen Pressgutstrang werden quaderförmige Packen, eben die "Ballen" abgeteilt, die in zur Kanalrichtung parallelen Ebenen von Schlingen aus Pressengarn umgeben werden, welche vor dem Ausstoß des jeweiligen Ballens aus dem Presskanal zu einer geschlossenen Umschnürung verknotet werden, die den Ballen zusammenhält. Im Fall von Einfachknotern wird der Garnstrang von dem an dem Ballen verbleibenden Knoten abgeschnitten und sein freies Ende für die Bildung der nächsten Umschnürung im Knoter festgeklemmt. Bei dem Einsatz von Doppelknotern werden zwei Garnstränge nur in dem Zeitabschnitt zwischen der Bildung des ersten und des zweiten Knotens geklemmt. Der eine Garnstrang läuft in der Regel entlang der Ballen-Unterseite und den beiden Ballen-Stirnseiten, während der andere Garnstrang in der Regel nur entlang der BallenOberseite verläuft; die Knoten befinden sich also am vorderen und hinteren Ende der Ballenoberseite. Die Vorgänge des Verknotens, Abschneidens und Festklemmens übernehmen die Garnknoter, die auf dem Presskanal befestigt sind.

Je nach Breite des quaderförmigen Ballens und der in diesem gewünschten Materialdichte, sind in einer Ballenpresse mehrere Garnknoter nebeneinander auf einer quer zum Presskanal laufenden gemeinsamen Antriebswelle (Bindewelle) montiert. Die Anzahl der Garnknoter und der diesen die Garnstränge jeweils zuführenden Elemente der Presse, wie der so genannten Pressennadeln, sind durch die Anzahl der notwendigen Umschnürungen eines Ballens bestimmt. Bei besonders großen und schweren Ballen und bei eine besonders hohe Dichte bzw. einen entsprechenden Pressdruck aufweisenden Ballen, sind mehr Umschnürungen erforderlich.

Die jeweilige Pressennadel führt im Falle von Einfachknotern den Garnstrang hinter dem durch den in Längsrichtung des Presskanals hin und hergehenden Presskolben abgeteilten quaderförmigen Ballen bis in den Zugriffsbereich (Gamhalterung) des zugehörigen Garnknoters. Dort wird der Garnstrang über die Zunge des den Knoten herstellenden Knoterhakens gelegt und weiter zu der Garnklemmeinrichtung transportiert. Von letzterer verläuft bereits das Ende der letzten Garnschlinge über die Knoterzunge zu einer Umlenkkante eines Messerhebels und weiter um den gesamten Ballen. Im Doppelknoter werden sowohl der über der Oberseite als auch der entlang der Unterseite des Ballens verlaufende Garnstrangabschnitt von der Pressennadel über die Zunge des Knoterhakens in die Garnklemmeinrichtung befördert. Die bogenförmigen Pressennadeln sind an einer Nadelschwinge befestigt. Die Nadelschwinge ist beiderseits des Pressenkanals gelagert; sie wird von der Bindewelle über eine Kurbel und ein Gestänge angetrieben.

Wenn es sich nicht um eine Ballenpresse, sondern um eine der bereits erwähnten Bindemaschinen handelt, wird das Bindegut zur Bildung eines Bundes auf einem Arbeitstisch, der sowohl waagerecht als auch geneigt angeordnet sein kann, abgelegt. Eine sichelförmige Bindenadel, die der Pressennadel entspricht, führt den Garnstrang so um das gebündelte Bindegut, dass das Garnende, das im Garnknoter festgehalten wird, mit dem um den Bund gelegten Garnstrang im Knoter für eine Verknotung zusammentrifft.

Bei einer Ballenpresse mit Einfachknoten verläuft also ein Garnstrang ausgehend von der Garnspule über die Unter-, vordere Stirn- und Oberseite eines Pressballens zu dem betreffenden Knoter, der ein Bauelement aufweist, welches u.a. das rückwärtige Ende des Garnstrangs festhält, nämlich eine Gamklemmeinrichtung. Wird nach dem Fertigpressen des Ballens der Knotvorgang ausgelöst, führt die Pressennadel den Garnstrang zuerst um die vierte Seite des Pressballens und dann in die Garnklemmeinrichtung des Knoters. Nach der Knotenbildung wird dieser Garnstrang kurz hinter dem Knoten von einem an dem Messerhebel angebrachten Messer durchtrennt, so dass die Garnschlinge um den Pressballen durch den Knoten geschlossen ist. Das nun freie Ende des vorher herangeführten Garnstrangs wird im Knoter durch die Garnklemmeinrichtung festgehalten, so dass der Garnstrang in der vorstehend beschriebenen Weise um die Seiten des nächsten Pressballens gelegt werden kann.

Für das Zustandekommen eines vollständigen und haltbaren Knotens ist es Voraussetzung, dass vor der Einleitung des Knotvorgangs die am Knoterhaken schwenkbar angeordnete Knoterzunge, die zusammen mit dem Hakenteil des Knoterhakens das so genannte Knotermaul bildet, fest auf dem Hakenteil des Knoterhakens anliegt oder, anders ausgedrückt: das Knotermaul muss geschlossen sein. Hierzu drückt ein federbelasteter Schließer auf eine am hinteren Ende der Knoterzunge drehbar gelagerte Zungenrolle. Wenn sich der Knoterhaken zur Bildung der Knotenschlaufen einmal um sich selbst dreht, wird die Rolle der Knoterzunge über eine Nockenfläche geführt, so dass das anfangs geschlossene Knotermaul kurz vor dem Ende der Hakendrehung so weit geöffnet ist, dass die beiden zwischen Garnhalterung und Knoterhaken gespannten Garnstränge sich in das Knotermaul einlegen. Am Ende einer Umdrehung des Hakens um 360° ist das Hakenmaul wieder geschlossen. Die beiden vorerwähnten Garnstränge werden von dem an dem Messerhebel befestigten Messer durchschnitten, und die von dem Knoterhaken gebildeten Knotenschlaufen von dem Abstreifkamm des Messerhebels über die abgetrennten Garnstrangenden gestreift. Hierdurch entsteht ein Knotengebilde, das seine Endform - einen festen, zugezogenen Knoten - nach Beendigung des Abstreifvorgangs und der Einwirkung einer Zugkraft erhält, die von dem Press- bzw. Bindegut ausgeht, das bestrebt ist, sich wieder auszudehnen.

Die Pressennadeln sind - wie erwähnt - auf einem Nadelbügel montiert, der an den beiden vertikalen Presskanalwänden schwenkbar gelagert ist, so dass er sich unterhalb des Presskanals bewegen kann. Die Nadel wird auf dem Bügel in Bezug auf den zugeordneten Knoter so befestigt, dass sie bei ihrer Auf- und Abwärtsbewegung durch den Presskanal an der Verzahnung des Triebels für den Antrieb des Knoterhakens entlang schleift. Hierdurch wird die Bewegungsbahn der Pressennadel so fixiert, dass der herantransportierte Garnstrang in die Mitnehmeraussparung sicher eingelegt wird.

Zur Vergrößerung der Anlagefläche für die Pressennadel ist es bekannt, zwei Zahnspitzen des Triebels auf der Knoterhakenachse gefast oder etwas abgeflacht auszubilden. Da die Reibstelle nicht geschmiert werden kann, zeigen sich im Laufe der Betriebszeit einer Maschine Verschleißmarkierungen sowohl an dem Triebel als auch an der Anlagefläche der Pressennadel.

Bewegt sich die Nadel aus dem Knoter heraus, dreht sich das Hakentriebel, und seine nicht abgeflachten Zahnspitzen stoßen gegen die Nadel, die dann unnötigerweise in Schwingungen versetzt wird.

Bei fortgeschrittenem Verschleiß an Triebel und Nadel verlagert sich die vorgegebene Nadelbahn zunehmend mit der Folge, dass der zum Knoter transportierte Garnstrang nicht mehr exakt in die bereitstehende, halbmondförmige Aussparung des Mitnehmers eingelegt wird.

Da weder die Aussparung des Mitnehmers noch der kpl. Knoter versetzt werden können, müssen an den Reibflächen verschlissene Nadeln und ggf. auch verschlissene Triebel ausgewechselt werden.

Besonders lange Nadeln, die in Großballenpressen eingesetzt werden, werden gelegentlich mit zweckentsprechenden Verschleißplatten versehen, die aber auch nach einer bestimmten Einsatzzeit zeitaufwendig gewechselt werden müssen.

Aus der FR-A1-2692102 ist ein Garnknoter bekannt, bei dem sich eine Garnführung an einer seitlich an einem Knoterrahmenteil angeordneten Abstützfläche abstützt.

### Aufgabe

Der Erfindung liegt die Aufgabe zugrunde, einen Garnknoter nach dem Oberbegriff des Anspruches 1 zu schaffen, bei dem der Verschleiß an Triebel und Nadel verringert wird.

### Zusammenfassung der Erfindung

Diese Aufgabe wird gelöst durch einen Garnknoter mit den Merkmalen des Anspruchs 1.

Hierdurch wird die Pressennadel entlang des Knoterhakentriebels auf einer Bahn geführt, die sich im Laufe der Betriebszeit einer Presse oder sonstigen Bindeeinrichtung nicht wesentlich versetzt. Um auch bestehende Garnknoter umrüsten zu können, wird das Knoterhakentriebel im Bereich der bisherige Reibstelle um einige Millimeter gekürzt, so dass die vorbeigeführte Nadel die Verzahnung nicht mehr berühren kann. Der durch die Verkürzung des Triebels entstandene Raum wird durch eine Rolle ausgefüllt, die sich auf dem Knoterhakenschaft frei drehen kann. Durch diese Maßnahme wird der Zahneingriff zwischen Knoter-Antriebsscheibe und Triebel nicht beeinträchtigt. Die Pressennadel wird nun von einer Rolle geführt, wodurch ein Verschleiß der anliegenden Nadelfläche durch das Abrollen kaum noch erkennbar ist.

Wenn sich die Nadel aus dem Knoter herausbewegt, dreht sich das Hakentriebel, ohne jedoch mit seinen Zahnspitzen die Nadel zu berühren, da die Führungsrolle die Nadel, vorzugsweise, auf 1 bis 1,5 mm Abstand zu der Verzahnung hält.

Es empfiehlt sich, die Laufbahn der Führungsrolle entweder zu härten oder durch eine Hartbeschichtung gegen Verschleiß zu schützen. Der Abrollvorgang kann auch durch eine Gummierung der Rollenbahn optimiert werden.

Die vorgenannten sowie die beanspruchten und in den Ausführungsbeispielen beschriebenen erfindungsgemäß zu verwendenden Bauteile unterliegen in ihrer Größe, Formgestaltung, Materialauswahl und technischen Konzeption keinen besonderen Ausnahmebedingungen, so dass die in dem Anwendungsgebiet bekannten Auswahlkriterien uneingeschränkt Anwendung finden können

Weitere Einzelheiten, Merkmale und Vorteile des Gegenstandes der Erfindung ergeben sich aus den Unteransprüchen, sowie aus der nachfolgenden Beschreibung der zugehörigen Zeichnung und Tabelle, in der - beispielhaft - ein Ausführungsbeispiel eines Garnknoters dargestellt ist.

### Kurze Beschreibung der Zeichnungsfiguren

In der Zeichnung zeigen:
- Fig. 1: eine Seitenansicht auf einen auf der Knoterwelle einer Presse angeordneten Garnknoter, in Richtung der Knoterwelle gesehen;
- Fig. 2: eine perspektivische Ansicht desselben Garnknoters; die Knoterantriebsscheibe ist nicht dargestellt;
- Fig. 3: von demselben Garnknoter einen Teil des Knoterrahmens mit darin vorgeschobener Pressennadel, jedoch ohne Garnstrang, in perspektivischer Ansicht;
- Fig. 4: denselben Bereich des Knoterrahmens in einer der Figur 1 entsprechenden (aber um etwa 80° verdrehten Seitenansicht, sowie;
- Fig. 5: von dem Knoterrahmen nach Figur 4 eine Detail-Ansicht (Ansicht A gemäß Fig. 4), jedoch unter ausschließlicher Darstellung der Spitze der Pressennadel und des Knoterhakens mit Antriebswelle.

### Detaillierte Beschreibung bevorzugter Ausführungsformen

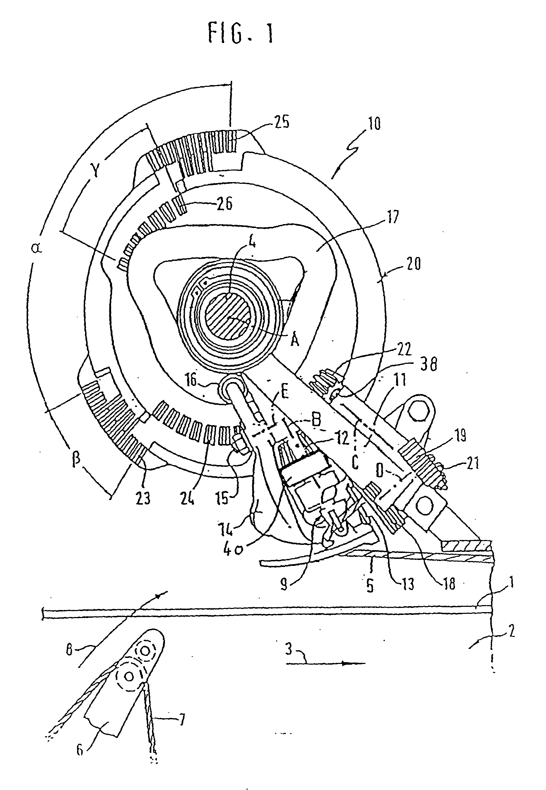

In Fig. 1 ist die obere Wandung 1 eines Pressenkanals 2 wiedergegeben, durch den das kompaktierte Pressgut, z.B. Stroh, im Sinne des Pfeiles 3 gefördert wird. Oberhalb des Pressenkanals 2 ist mit Abstand oberhalb der oberen Wandung 1 eine sich quer über die Breite des Pressenkanals 2 erstreckende Knoterwelle 4 um ihre Achse A drehbar gelagert, auf der, je nach Breite des Pressenkanals 2, in der Regel zwei bis sechs Garnknoter 10 angeordnet sind. Jedem Garnknoter 10 ist eine in einer vertikalen Längsebene um den Pressballen gelegte Bindegarnschlaufe zugeordnet, die in dem Ausführungsbeispiel der Fig. 1 durch die Bildung zweier Knoten geschlossen wird, die durch den Garnknoter 10 hergestellt werden. Von der in der Förderrichtung 3 voreilenden Stirnseite des Pressballens kommt der über die Oberseite des Pressballens laufende Garnstrang 5 des Bindegarns, der durch nicht dargestellte, auf Fig. 1 links von dem Garnknoter 10 angeordnete Mittel strammgehalten wird und von dem ein Abschnitt bei Einfachknotern auch während der Pressphase im Knoter geklemmt wird. Bei Doppelknotern wird ein Strangabschnitt durch außerhalb des Knoters angeordnete Mittel gespannt. Die Pressennadel 6 führt um die rückwärtige Stirnseite des Pressballens von unten einen weiteren Garnstrang 7 des Bindegarns im Sinne des Pfeiles 8 hoch, so dass der Strang 7 im Bereich des Garnknoters 10 mit dem Strang 5 zusammengebracht und verknotet werden kann.

Der Garnknoter 10 umfasst einen Knoterhaken 9, der im Knoterrahmen 11 um eine zur Knoterwelle 4 radial, gemäß Fig. 1 schräg aufwärts, gerichtete Achse B drehbar und über ein Ritzel 12 um diese Achse B antreibbar ist.

Ein Messer 13 ist quer zu den Strängen 5 und 7 des Bindegarns beweglich angeordnet, um das Garn nach der Knotenbildung abzuschneiden. Das Messer 13 ist an einem Messerhebel 14 angebracht, dessen Wellenzapfen 15 um die Achse E in einem Lager im Knoterrahmen 11 schwenkbar ist und dabei durch eine Rolle 16 bewegt wird, die sich in einer Nut 17 der als Ganzes mit 20 bezeichneten Knoterscheibe verlagert; dargestellt ist die Scheibe eines Doppelknoters.

18 ist der Garnhalter oder Garnklemmrichtung, der die Stränge 5 und 7 während bestimmter Arbeitsabläufe des Knoterhakens 9 und des Messers 13 in Position hält und der um eine unter etwa 45° nach vorn in einer vertikalen Ebene geneigte Achse D drehbar ist. Der Garnhalter 18 umfasst den eigentlichen Halter 18A und den Mitnehmer 18B, welcher mit seinem Schaft in einem Lager im Knoterrahmen 11 geführt ist. Der Antrieb erfolgt dabei über ein Ritzel 19, welches mit einer Schnecke 21 in Eingriff steht, die von einem Ritzel 22 antreibbar ist. Die Schnecke 21 sitzt an einem Ende einer Ritzelwelle 38 mit der Achse C, an deren anderem Ende das Ritzel 22 befestigt ist.

Die Ritzel 12 und 22 werden bei Knotern, die bei einer Umdrehung der Knoterantriebsscheibe nur einen Knoten erzeugen, von jeweils einem Zahnsegment auf der Knoterscheibe angetrieben. Das Bindeverfahren ist im Einzelnen in der EP 0 237 771 beschrieben.

Bei Knotern, die bei einer Umdrehung der Knoterscheibe zwei Knoten erzeugen, werden die Ritzel 12 und 22 durch Paare von Zahnsegmenten 23, 24 bzw. 25, 26 angetrieben, die auf der in Fig. 1 dem Betrachter zugewandten Flachseite der Knoterscheibe 20 im Bereich deren äußeren Randes angeordnet sind. Die Zahnsegmente 24, 26 sind untereinander gleich und liegen radial etwas weiter innen, so dass sie bei der Drehung der Knoterscheibe 20 nur mit dem Ritzel 22 in Eingriff kommen können. Die Zahnsegmente 23, 25 sind ebenfalls untereinander gleich und liegen radial ganz außen und treiben das Ritzel 12 an.

Die Zahnsegmente 25, 26 folgen im Übrigen den Zahnsegmenten 23, 24 bei einer Drehung der Knoterscheibe 20 entgegen dem Uhrzeigersinn um einen Winkel α von etwa 115° in Umfangsrichtung nach. Die Zahnsegmente 23, 25 erstrecken sich über einen Winkel β von etwa 30°, die Zahnsegmente 24, 26 um einen Winkel γ von etwa 40°.

Der in Fig. 1 dargestellte Knoter 10 vollführt bei einer Umdrehung der Knoterscheibe 20 - angetrieben durch die Zahnsegmente 23, 24 bzw. 25, 26 - rasch hintereinander zwei Verknotungen, nämlich die erste, die den hinter der rückwärtigen Stirnseite eines Pressballens hochkommenden Strang 7 mit dem oberen Strang 5 verbindet und dadurch eine geschlossene Bindegarnschlaufe bildet, und eine zweite, die den an der vorderen Stirnseite des nachfolgenden Pressballens hochkommenden Strang mit dem auf der Oberseite des nachfolgenden Pressballens laufenden Strang verbindet und dadurch die Bildung einer neuen Bindegarnschlaufe für den neu zu bildenden Pressballen einleitet. Zwischen den Knoten wird das Bindegam abgetrennt, so dass die aufeinander folgenden Pressballen voneinander getrennt werden.

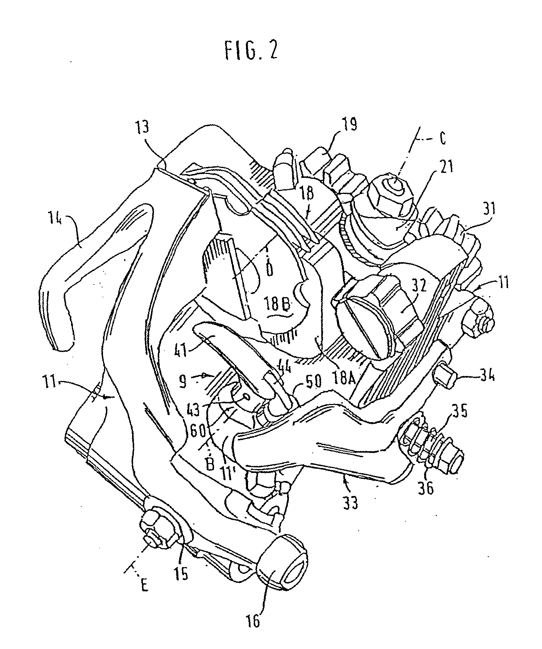

Aus der Darstellung der Fig. 2 ist ersichtlich, dass mit der Schnecke 21 noch ein zweites Ritzel 31 zusammenwirkt, auf dessen Welle am anderen Ende ein Federnocken 32 angeordnet ist, der periodisch und nachgiebig einen Druck auf den Halter 18A ausübt, so dass dieser fester in den Mitnehmer 18B hineingedrückt wird und das Garn besonders fest hält.

Auf der gemäß Fig. 2 vorderen Seite des Knoterrahmens 11 ist der so genannte Schließer 33 angeordnet, der als längliches Teil ausgebildet und an einem Ende auf einem im Knoterrahmen 11 sitzenden Zapfen 34 lose gehalten ist. Etwa in der Mitte ist der Schließer von einer Schraube 35 durchgriffen, die den Schließer 33 über eine Schraubendruckfeder 36 von außen gegen den Knoterrahmen 11 hin drückt. Das freie Ende des Schließers 33 besitzt auf der in Fig. 2 dem Betrachter abgewandten Seite eine Laufbahn, an der die Zungenrolle 50 bei der Drehung des Knoterhakens 9 um die Achse B zur Anlage kommt. Die Kraft der Feder 36 bewirkt, dass die Knoterzunge 44 in der Phase der Anlage der Zungenrolle 50 fedemd fest gegen den Hakenteil 41 des Knoterhakens 9 gedrückt und das Knotermaul besonders fest geschlossen gehalten werden.

Die Knoterzunge 44 bildet einen um eine Schwenkachse 43 schwenkbar gelagerten zweiarmigen Hebel dessen einer Arm (Zungenteil) mit dem Hakenteil 41 des Knoterhakens 9 unter Bildung des Knotermauls zusammenwirkt und an dessen anderem Arm die Zungenrolle 50 um deren Achse drehbar gelagert ist.

Das Öffnen des Knotermauls wird dadurch bewerkstelligt, dass bei der Drehung des Knoterhakens 9 die Zungenrolle über eine in Figur 2 nur schematisch angedeutete Nockenfläche 60 läuft, wodurch die Zungenrolle 50 gemäß Figur 2 angehoben und das Zungenteil von dem Hakenteil 41 weggeschwenkt wird.

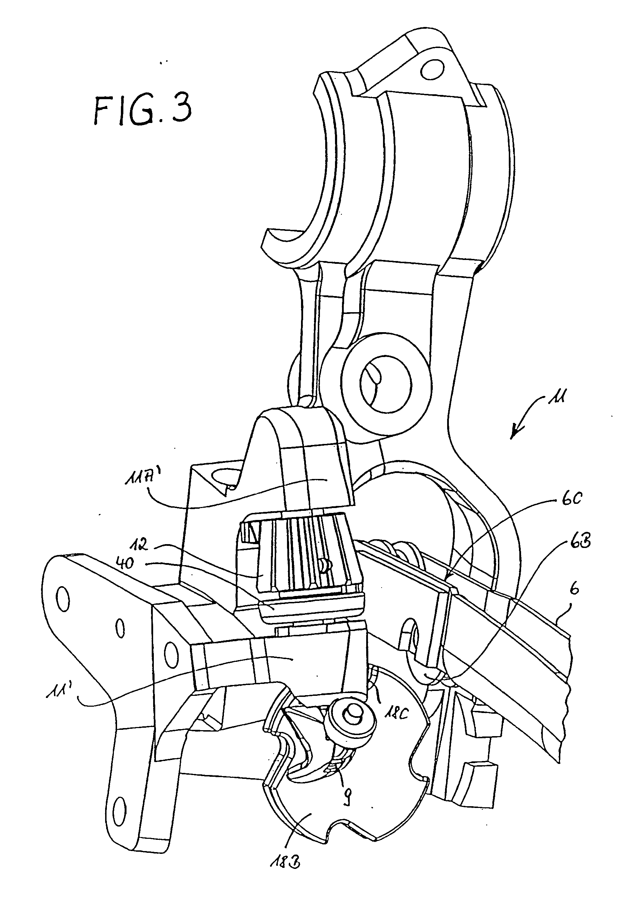

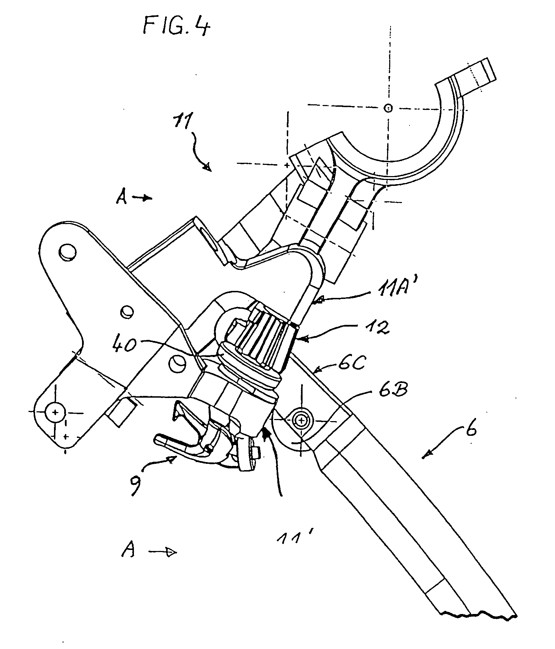

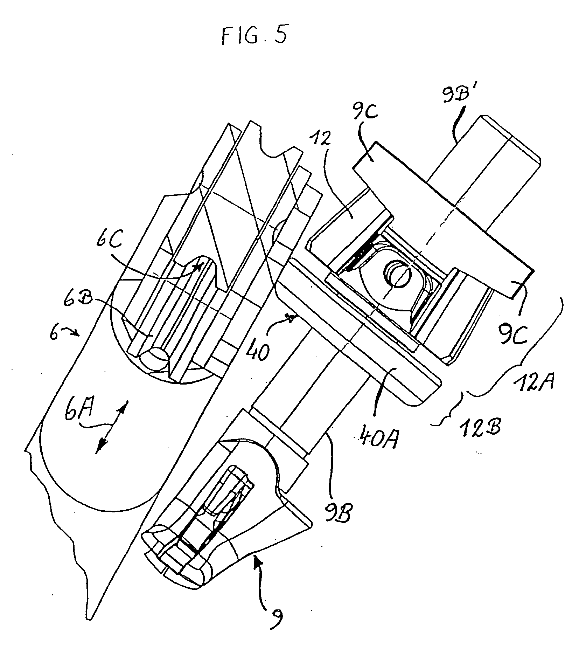

Wie aus den Figuren 3 bis 5 ersichtlich, ist der Knoterhaken 9 an einem Ende einer Drehwelle 9B und das als Antriebstriebel dienende Ritzel 12 an dem gegenüberliegenden Wellenende der Drehwelle 9B angeordnet. Aus Figur 5 ist ersichtlich, dass die Drehwelle 9B an dem dem Knoterhaken 9 gegenüberliegenden Ende, also jenseits des Antriebstriebels mit einem Lagerzapfen 9B' versehen ist. Hierdurch wird eine zweiseitige Lagerung des Antriebstriebels erreicht. Die zugehörigen Naben 11' u. 11A' befinden sich am Knoterrahmen 11 (Fig. 2, 3, 4). Wie ferner ersichtlich, ist das Antriebstriebel als Kegelzahnrad ausgebildet, welches in bekannter Weise nur auf einem Teilumfang mit Zähnen (Zahnsegment) und im Übrigen mit einem Steuernocken und einem Kragelement 9C versehen ist. Das Kragelement 9C weist eine planebene Gleitfläche auf, die an der Gleitfläche der Knoter-Antriebsscheibe 20 in deren Ruhestellung und zeitweise auch in deren Drehphase anliegt.

Das zwischen den Naben 11', 11A' beidendig gefasste Antriebstriebel gestattet es, den mit ihm drehfestverbundenen Knoterhaken 9 für die Knotenbildung um 360° zu drehen, wie weiter oben beschrieben. Das Antriebstriebel weist lediglich in einer ersten, (in der dargestellten und insoweit bevorzugten Ausführungsform in der vom Knoterhaken entfernten) axialen Zone 12A die als Zahnsegment ausgebildete Verzahnung auf. In einer zweiten axialen Zone 12B, die in dem dargestellten und insoweit bevorzugten Ausführungsbeispiel an dem zum Knoterhaken 9 hinweisenden Ende vorgesehen ist, weist das Antriebstriebel eine Rolle 40 auf, die auf der Drehwelle 9B, also dem Knoterhakenschaft, frei drehbar ist. Sie kann aus jedem geeigneten metallischen und nichtmetallischen Werkstoff bestehen. Bevorzugt ist eine metallische Rolle mit gehärteter Laufbahn 40A. Gewünschtenfalls kann die Laufbahn auch einen elastischen Überzug, wie eine Gummierung aufweisen. Durch diese soll eine gewisse Haftreibung zur Pressennadel erzeugt werden.

Wenn nun das vordere Ende der an sich bekannten Pressennadel 6 (und die von ihr geführten und an den beiden endseitigen Rollen umgelenkten Garnstränge sind der Übersichtlichkeit halber fortgelassen) entlang der Richtung des Doppelpfeiles 6A auf den Knoterrahmen 11 zubewegt wird, kommt die eine Seitenfläche der Pressennadel 6 zur Anlage an der Laufbahn 40A der Rolle 40 - in der Regel noch bevor die Spitze der Pressennadel in den Knoterrahmen 11 eintaucht. Der Durchmesser und die leicht kegel- oder kalottenstumpfförmige Gestaltung der Laufbahn 40A ist so gewählt, dass die Pressennadel möglichst flächig an der Laufbahn 40A anliegt und exakt dem Mitnehmer 18B (siehe Figur 2 und 3) in einer solchen Weise angenähert wird, dass sich der durch die mit Rolle 6B versehene Nadelöse 6C herangeführte Garnstrang in die Mitnehmernut einlegen kann. Die Anordnung ist so getroffen, dass der Abstand der Pressennadel 6 von der Peripherie des Zahnsegmentes des Antriebstriebels minimal, vorzugsweise 1 bis 1,5 mm ist.

### Bezugszeichenliste:

- 1: Wandung
- 2: Pressenkanal
- 3: Pfeil
- 4: Knoterwelle
- 5: Garnstrang
- 6: Pressennadel
- 6A: Doppelpfeil
- 6B: Rolle
- 6C: Nadelöse
- 7: Garnstrang
- 8: Pfeil
- 9: Knoterhaken
- 9B: Drehwelle
- 9B': Lagerzapfen
- 10: Garnknoter
- 11: Knoterrahmen
- 11': Nabe
- 11A': Nabe
- 12: Ritzel
- 12A: Zone
- 12B: Zone
- 13: Garnmesser
- 14: Messerhebel
- 15: Wellenzapfen
- 16: Rolle
- 17: Nut
- 18: Garnklemmeinrichtung
- 18A: Halter
- 18B: Mitnehmer
- 18C: halbmondförmige Aussparung im Mitnehmer
- 19: Ritzel
- 20: Knoter-Antriebsscheibe
- 21: Schnecke
- 22: Ritzel
- 23: Zahnsegmente
- 24: Zahnsegmente
- 25: Zahnsegmente
- 26: Zahnsegmente
- 31: Ritzel
- 32: Federnocken
- 33: Schließer
- 34: Zapfen
- 35: Schraube
- 36: Schraubendruckfeder
- 38: Ritzelwelle
- 40: Rolle
- 40A: Laufbahn
- 41: Hakenteil
- 43: Schwenkachse
- 44: Knoterzunge
- 50: Zungenrolle
- 60: Nockenfläche

## Patentansprüche

1. Gamknoter (10), insbesondere für Ballenpressen, mit einem Knoterrahmen (11), der zumindest einen Knoterhaken (9) und eine Knoterantriebsscheibe (20) sowie einen Garnhalter (18) drehbar aufnimmt,
wobei der Knoterhaken (9) in einem Lager (9A) drehbar gelagert ist und seine Drehwelle (9B) von einem Antriebstriebel für die Knotenbildung drehangetrieben wird, und
mit einer Pressennadel (6) mit einer Gamöse, durch welche ein Garnstrang (7) geführt wird und die zur Knotenbildung an dem Antriebstriebel entlanggleitend zur Garnklemmeinrichtung (18) vorgeschwenkt wird,
**dadurch gekennzeichnet,**
**dass** das Antriebstriebel in einer ersten axialen Zone die Antriebsverzahnung und in einer zweiten axialen Zone eine Rolle (40) aufweist, die sich auf der Drehwelle (9B) frei drehen kann und die Pressennadel (6) seitlich abstützt.

2. Gamknoter nach Anspruch 1, **dadurch gekennzeichnet, dass** die Rolle (40) einen minimalen Abstand der Pressennadel (6) von dem Antriebstriebel (12) von 0,5 bis 2,5 vorzugsweise 1 bis 1,5 mm vorgibt.

3. Gamknoter nach Anspruch 1 oder 2, **dadurch gekennzeichnet, dass** die Rolle (40) an dem dem Knoterhaken (9) zugewandten Ende des Antriebstriebels (12) angeordnet ist.

4. Garnknoter nach einem der Ansprüche 1 bis 3, **dadurch gekennzeichnet, dass** die Rolle (40) oder deren Laufbahn gehärtet ist.

5. Garnknoter nach einem der Ansprüche 1 bis 3, **dadurch gekennzeichnet, dass** die Laufbahn (40A) der Rolle (40) einen elastischen Überzug aufweist, insbesondere gummiert ist.

6. Garnknoter nach einem der Ansprüche 1 bis 4, **dadurch gekennzeichnet, dass** die Laufbahn (40A) der Rolle (40) kegelstumpfförmig ist.

## Claims

1. Twine knotter (10), in particular for balers, comprising at least one knotter frame (11) which rotatably accommodates a knotter hook (9), a knotter drive disk (20) and a twine holder (18), wherein the knotter hook (9) is rotatably mounted in a bearing (9A) and its rotary shaft (9B) is driven in rotating manner by a drive pinion for knot formation, and comprising a pressing needle (6) with a twine eye through which a twine cord (7) is guided and which, for knot formation, is pivoted forward, sliding alongside the drive pinion toward the twine clamping device (18), **characterised in that**, in a first axial zone, the drive pinion has the drive toothing and, in a second axial zone, it has a roller (40) which is able to rotate freely on the rotary shaft (9B) and laterally supports the pressing needle (6).

2. Twine knotter according to claim 1, **characterised in that** the roller (40) provides a minimum spacing of the pressing needle (6) from the drive pinion (12) in the range of 0.5 mm to 2.5 mm and preferably 1 mm to 1.5 mm.

3. Twine knotter according to claim 1 or 2, **characterised in that** the roller (40) is arranged at the end of the drive pinion (12) facing towards the knotter hook (9).

4. Twine knotter according to one of the claims 1 to 3, **characterised in that** the roller (40) or its running surface is hardened.

5. Twine knotter according to one of the claims 1 to 3, **characterised in that** the running surface (40A) of the roller (40) has an elastic covering, and in particular is rubberised.

6. Twine knotter according to one of the claims 1 to 4, **characterised in that** the running surface (40A) of the roller (40) has a truncated conical form.

## Revendications

1. Noueur de fil (10) notamment pour des presses à balles comportant un châssis de noueur (11) recevant à rotation au moins un crochet du noueur (9) et une came d'entraînement du noueur (20) ainsi qu'un support de fil (18),
le crochet du noueur (9) est monté à rotation dans un palier (9A) et son axe de rotation (9B) est entraîné en rotation par un pignon d'entraînement pour former le noeud, et
une aiguille de presse (6) a un chas traversé par un brin (7) du fil qui est basculé vers l'avant pour former le noeud en glissant le long du pignon d'entraînement vers l'installation de serrage de fil (18),
**caractérisé en ce que**
le pignon d'entraînement comporte une denture d'entraînement dans une première zone axiale et un galet (40) dans une seconde zone axiale, ce galet pouvant tourner librement sur l'axe de rotation (9B) et soutenant latéralement l'aiguille de presse (6).

2. Noueur de fil selon la revendication 1,
**caractérisé en ce que**
le galet (40) prédéfinit une distance minimale de l'aiguille de presse (6) par rapport au pignon d'entraînement (12) comprise entre 0,5 mm à 2,5 mm et de préférence entre 1 mm à 1,5 mm.

3. Noueur de fil selon la revendication 1 ou 2,
**caractérisé en ce que**
le galet (40) est porté par l'extrémité du pignon d'entraînement (12) tournée vers le crochet du noueur (9).

4. Noueur de fil selon les revendications 1 à 3,
**caractérisé en ce que**
le galet (40) ou son chemin de circulation sont durcis.

5. Noueur de fil selon les revendications 1 à 3,
**caractérisé en ce que**
le chemin de circulation (40A) du galet (40) comporte un revêtement élastique notamment un bandage en caoutchouc.

6. Noueur de fil selon les revendications 1 à 4,
**caractérise en ce que**
le chemin de circulation (40A) du galet (40) est en forme de tronc de cône.
